Europäisches Patentamt

European Patent Office

Office européen des brevets

(19)

(11) Numéro de publication : **0 404 606 B1**

(12)

# FASCICULE DE BREVET EUROPEEN

(45) Date de publication du fascicule du brevet :
**18.05.94 Bulletin 94/20**

(51) Int. Cl.⁵ : **G05D 1/00**

(21) Numéro de dépôt : **90401063.4**

(22) Date de dépôt : **19.04.90**

(54) **Système pour l'élaboration à bord d'un aéronef d'un signal d'alarme en cas d'anomalie pendant le décollage.**

(30) Priorité : **20.06.89 FR 8908177**

(43) Date de publication de la demande :
**27.12.90 Bulletin 90/52**

(45) Mention de la délivrance du brevet :
**18.05.94 Bulletin 94/20**

(84) Etats contractants désignés :
**DE ES GB IT NL**

(56) Documents cités :
**EP-A- 0 025 614**
**EP-A- 0 166 487**
**WO-A-85/01372**
**GB-A- 1 602 477**
**US-A- 4 251 868**
**US-A- 4 773 015**

(73) Titulaire : **AEROSPATIALE SOCIETE
NATIONALE INDUSTRIELLE Société
Anonyme dite:**
**37, Boulevard de Montmorency**
**F-75016 Paris (FR)**

(72) Inventeur : **Bonafe, Jean-Louis**
**33, Bld Deltour**
**F-31500 Toulouse (FR)**

(74) Mandataire : **Bonnetat, Christian**
**CABINET BONNETAT 23, Rue de
St.Pétersbourg**
**F-75008 Paris (FR)**

## Description

La présente invention concerne un système pour l'élaboration à bord d'un aéronef d'un signal d'alarme en cas d'anomalie pendant le décollage.

Un tel système est décrit dans les documents EP-A-0 166 487 et US-A-4 773 015.

La procédure de décollage, depuis le lâcher des freins jusqu'à l'envol de l'aéronef, constitue une phase délicate de l'exploitation de l'aéronef, pendant laquelle, du fait de pertes de performance, de changements en ce qui concerne la direction et l'intensité du vent, ou pour d'autres raisons, des accidents ou incidents, dont la probabilité a été évaluée à environ $10^{-6}$ par décollage, peuvent avoir lieu. En conséquence, il serait nécessaire, pour améliorer la sécurité, de fournir à l'équipage, en temps voulu, des informations sures et précises lui permettant de décider si la procédure de décollage doit être interrompue ou corrigée et, cela, avant que l'aéronef roulant sur la piste n'atteigne une vitesse critique, obtenue par un calcul théorique, définie comme la vitesse jusqu'à laquelle le décollage peut être interrompu et au-delà de laquelle le décollage doit être poursuivi.

Pour mieux comprendre cette notion de vitesse critique, désignée par la suite par $V_1$, il convient tout d'abord de définir différentes distances caractéristiques d'une piste dans un aéroport. En effet, la piste et ses abords immédiats peuvent être divisés en plusieurs zones selon leur fonction :
- la longueur de piste disponible, qui est la longueur de piste capable de recevoir l'aéronef dans toutes les conditions d'utilisation,
- la zone d'arrêt, qui est une extension de la piste proprement dite, utilisable comme voie de circulation au sol, mais permettant aussi le freinage en cas d'interruption de la procédure de décollage,
- la zone dégagée, qui est la zone dans le prolongement immédiat de la piste, pouvant être prise en compte pour le calcul de la distance de décollage.

On doit ensuite tenir compte des différentes distances relatives à la procédure de décollage pour un aéronef donné :
- la distance de roulement, qui est la distance, rapportée au sol, parcourue par l'aéronef entre le lâcher des freins et la moitié du "segment" défini par le point atteint par l'aéronef à la vitesse à laquelle il quitte le sol et le point correspondant au passage de l'aéronef à une altitude définie dans les règlements de certification soit : 10,7 m (35 pieds). Elle doit être inférieure ou égale à la longueur de piste disponible ;
- la distance de décollage, qui est la distance, rapportée au sol, parcourue par l'aéronef entre le lâcher des freins et le passage de l'aéronef à ladite altitude de 10,7 m (35 pieds). Dans l'hypothèse où une panne de moteur se produit à $V_1 + \varepsilon$ ($\varepsilon$ étant le signe mathématique désignant une valeur infiniment petite), elle doit être inférieure ou égale à la somme :
  
  longueur de piste disponible + zone dégagée ;
- la distance d'accélération-arrêt, qui est la distance parcourue par l'aéronef entre le lâcher des freins et l'arrêt de l'aéronef en utilisant ses seuls freins, si une panne de moteur se produit à $V_1-\varepsilon$. Cette distance doit être au plus égale à la somme :
  
  longueur de piste disponible + zone d'arrêt.

A partir du moment où l'aéronef atteint la vitesse critique $V_1$ définie par calcul avant le décollage et figée pour le décollage, la procédure de décollage doit être impérativement poursuivie. En effet, dans le cas contraire, l'arrêt de l'aéronef ne pourra pas être obtenu avant la fin de la zone d'arrêt, telle que définie ci-dessus. Jusqu'à présent, le pilote compare la vitesse de l'aéronef à ladite vitesse critique. La vitesse critique $V_1$ est une vitesse définie par rapport à l'air, ce qui entraîne un premier risque lors d'une variation de vent en cours de décollage. Cependant, indépendamment de toute variation de vent, quoique la notion de vitesse $V_1$ soit facile à vérifier par le pilote, en réalité cette notion est liée à une notion de distance, actuellement inconnue de l'équipage, qui est bien un paramètre critique pour le décollage. Ainsi, toute dégradation des performances de l'aéronef, par rapport aux performances théoriques, implique que l'aéronef atteindra ladite vitesse critique après avoir parcouru une distance supérieure à la distance théorique calculée, correspondant à cette vitesse critique. En vérité, dans l'état actuel des choses, le pilote qui décide d'interrompre la procédure de décollage à $V_1-\varepsilon$ ne peut pas être sûr qu'il pourra arrêter l'aéronef sans risquer de sortir de la piste.

L'invention a pour but d'éviter ces inconvénients, et concerne un système permettant d'élaborer, à bord d'un aéronef, un signal d'alarme en cas d'anomalie pendant le décollage, adapté pour que le pilote, le cas échéant, puisse décider en toute sécurité de modifier ou bien d'interrompre le processus de décollage, c'est-à-dire en étant sur dans ce dernier cas qu'il lui reste une longueur de piste suffisante pour arrêter l'aéronef dans les limites de la piste.

A cet effet, le système pour l'élaboration à bord d'un aéronef d'un signal d'alarme en cas d'anomalie pendant le décollage, avant que l'aéronef n'atteigne une vitesse critique de roulement jusqu'à laquelle le processus de décollage peut être modifié ou interrompu et au-delà de laquelle le décollage doit être poursuivi, est re-

EP 0 404 606 B1

marquable, selon l'invention, en ce qu'il comporte :
- des moyens susceptibles de délivrer des signaux représentatifs de l'accélération théorique et de l'accélération réelle, à un instant donné, de l'aéronef,
- des moyens pour calculer l'expression :

$$D_1 = D_1 t + (Vat^2 - V_{11}^2 t) / 2\gamma_1 t$$

dans laquelle :
    . $\gamma_1 t$ est l'accélération réelle, à l'instant t, de l'aéronef,
    . $V_{11} t$ est la vitesse réelle, à l'instant t, de l'aéronef,
    . $Vat$ est la vitesse théorique, à l'instant t, de l'aéronef,
    . $D_1 t$ est la distance réelle parcourue, à l'instant t, par l'aéronef, et
    . $D_1$ est la distance réelle prévue parcourue par l'aéronef lorsque $V_{11} t$ sera égale à $Vat$,
ainsi que le rapport :

$$D_1 / Dat$$

dans lequel :
    . $D_1$ est tel que défini ci-dessus, et
    . $Dat$ est la distance théorique parcourue, à l'instant t, par l'aéronef,
- des moyens pour comparer le rapport $D_1 / Dat$ à un seuil prédéterminé S garantissant une distance minimale de sécurité pour le freinage et l'arrêt de l'aéronef, et fournir un signal d'information à des moyens d'alarme susceptibles d'émettre un signal d'alarme lorsque ledit rapport $D_1 / Dat$ est supérieur ou égal audit seuil.

Ainsi, on peut prévoir, à tout instant, quelle sera la distance parcourue par l'aéronef lorsque sa vitesse aura atteint la vitesse théorique à cet instant, c'est-à-dire la vitesse calculée pour cet instant dans le calcul des distances théoriques de décollage. Le calcul est permanent de 0 à $V_1$, de sorte que la prévision est réalisée jusqu'au point de décision. Lorsque la distance prévue dépasse d'un seuil prédéterminé la distance théorique, l'alarme est déclenchée, et le pilote peut arrêter en toute sécurité l'aéronef, c'est-à-dire sans risquer de sortir de la piste, du fait que la distance effectivement parcourue par l'aéronef à cet instant est par définition inférieure, et cela de façon suffisante, à la distance théorique, ce qui garantit un arrêt de l'aéronef dans les limites de la piste, jusqu'à $V_1$. En d'autres termes, l'alarme sera déclenchée avec une avance suffisante puisqu'elle sera activée en calculant, à un instant donné, la distance qui serait parcourue par l'aéronef dans une situation future, ce qui permet de garder une marge de sécurité suffisante en distance et en vitesse. Il convient de noter que le terme "signal d'alarme" signifie aussi bien "signal d'alerte", et que le système de l'invention, en dehors de signaux d'alarme, est susceptible de fournir également des signaux d'"information", lorsque ledit seuil n'est pas atteint.

Dans le cas d'une procédure de décollage économique, dans laquelle la puissance maximale des moteurs de l'aéronef n'est pas utilisée, il peut être intéressant d'élaborer un signal, non plus en fonction de paramètres "réels", mais en fonction de paramètres "réalisables". A cette fin, selon une autre caractéristique de l'invention, le système comprend de plus :
- des moyens susceptibles de délivrer des signaux représentatifs de l'accélération réalisable, à un instant donné, de l'aéronef,
- des moyens pour calculer l'expression :

$$D_2 = D_2 t + (Vat^2 - V_{12}^2 t) / 2\gamma_1 t$$

dans laquelle :
    . $\gamma_1 t$ est l'accélération réelle, à l'instant t, de l'aéronef,
    . $V_{12} t$ est la vitesse réalisable, à l'instant t, de l'aéronef,
    . $Vat$ est la vitesse théorique, à l'instant t, de l'aéronef,
    . $D_2 t$ est la ditance réalisable, parcourue par l'aéronef à l'instant t, et
    . $D_2$ est la distance réalisable prévue, parcourue par l'aéronef lorsque $V_{12} t$ sera égale à $Vat$,
ainsi que le rapport :

$$D_2 \,/\, Dat$$

dans lequel :

. $D_2$ est tel que défini ci-dessus, et

. Dat est la distance théorique parcourue, à l'instant t, par l'aéronef,

lesdits moyens de comparaison permettant de comparer le rapport $D_2 \,/\, Dat$ audit seuil S prédéterminé, et lesdits moyens d'alarme étant susceptibles d'émettre un signal d'alarme lorsque ledit rapport $D_2 \,/\, Dat$ est supérieur ou égal audit seuil.

Selon une autre caractéristique de l'invention, le système comprend de plus des moyens pour déterminer la variation $\Delta W$ de la composante longitudinale du vent, à partir de l'expression $Wx = VTAS - V_{11}t$, dans laquelle Wx est la composante longitudinale du vent, VTAS la vitesse aérodynamique et $V_{11}t$ la vitesse réelle de l'aéronef, lesdits moyens de comparaison permettant de comparer $\Delta W$ à un seuil prédéterminé $\Delta WS$, et lesdits moyens d'alarme étant susceptibles d'émettre un signal d'alarme lorsque $\Delta W$ est supérieur ou égal audit seuil $\Delta WS$.

Selon encore une autre caractéristique de l'invention, ledit seuil S, auquel sont comparés le rapport $D_1/Dat$ et/ou $D_2/Dat$, est variable, et diminue lorsque la différence $\Delta V$ entre la vitesse critique et la vitesse atteinte par l'aéronef diminue.

De préférence, ledit seuil S est défini par la fonction $S = a \Delta V + b$, $\underline{a}$ et $\underline{b}$ étant des constantes compatibles avec les marges théoriques du calcul du décollage.

Selon une autre caractéristique de l'invention, le système comporte des moyens d'échantillonage permettant d'obtenir une suite de valeurs numériques des accélérations théorique, réelle et réalisable et de la vitesse aérodynamique.

Les figures du dessin annexé feront bien comprendre comment l'invention peut être réalisée.

La figure 1 est le schéma synoptique de principe du système conforme à l'invention.

La figure 2 donne le schéma d'un exemple de réalisation d'un dispositif de calcul utilisé dans le système conforme à l'invention.

La figure 3 donne le schéma d'un exemple de réalisation d'un dispositif pour fournir un signal d'information utilisé dans le système conforme à l'invention.

La figure 4 montre la courbe de variation du seuil du signal d'alarme en fonction de la vitesse de l'aéronef.

La figure 5 montre les courbes des accélérations, vitesses et distances utilisées dans le système conforme à l'invention, au voisinage d'un instant donné du décollage.

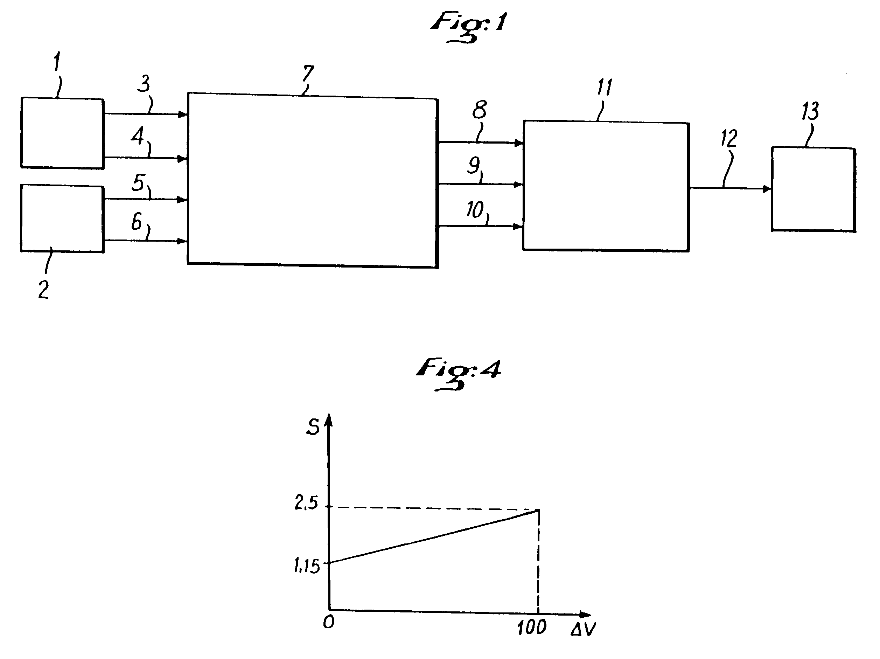

En se référant au schéma synoptique de la figure 1, le système conforme à l'invention comprend un premier dispositif de calcul 1 pour calculer l'accélération théorique $\gamma at$, correspondant à la demande du pilote aux moteurs de l'aéronef, et l'accélération réalisable $\gamma_2 t$, que peuvent fournir les moteurs compte tenu du nombre de tours ou de la pression que l'on observe sur chacun d'eux, de l'aéronef. Pour cela, le dispositif de calcul 1 reçoit un certain nombre de paramètres dépendant du type d'aéronef considéré, ainsi que des moteurs dont il est équipé, et élabore à partir de ces données, de façon connue, lesdites accélérations.

L'accélération réelle $\gamma_1 t$ et la vitesse aérodynamique VTAS sont mesurées par la centrale inertielle et le système anémométrique de bord, respectivement, comme cela est schématisé sur la figure 1, par le dispositif 2.

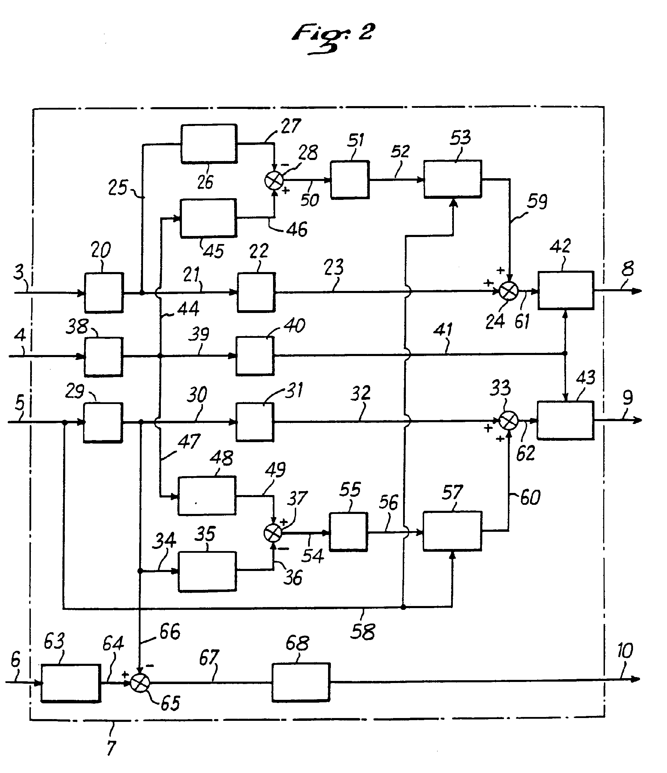

Les sorties du dispositif 1, auxquelles apparaissent les accélérations $\gamma at$ et $\gamma_2 t$, sont reliées, par les liaisons respectives 3 et 4, à des entrées d'un second dispositif de calcul 7, décrit en détail en regard de la figure 2. De même, les sorties du dispositif 2, auxquelles apparaissent l'accélération $\gamma_1 t$ et la vitesse VTAS, sont reliées, par les liaisons respectives 5 et 6, à d'autres entrées du dispositif de calcul 7.

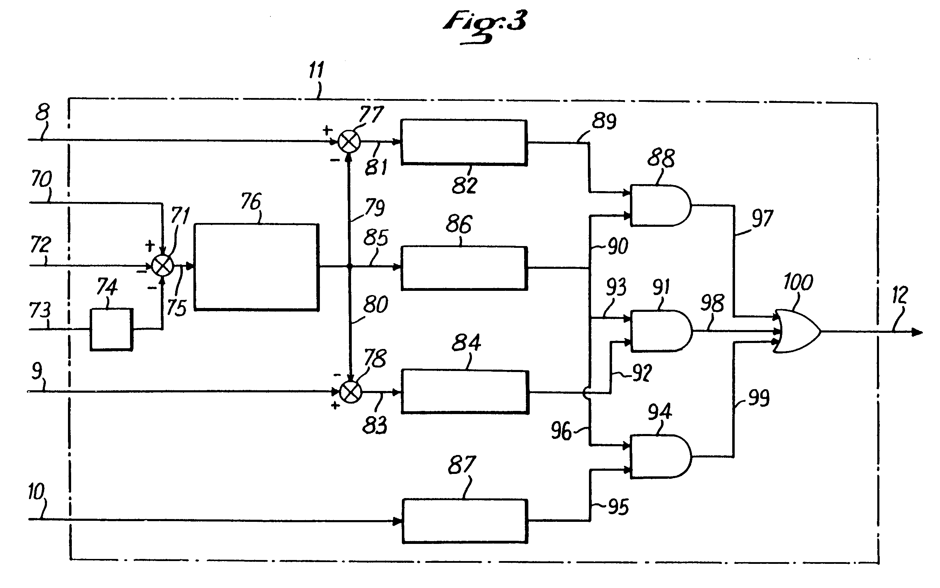

Les sorties du dispositif 7, auxquelles apparaissent les valeurs $D_1/Dat$, $D_2/Dat$ et $\Delta W$, sont reliées, par les liaisons respectives 8, 9 et 10, à un dispositif pour fournir un signal d'information 11, décrit en détail en regard de la figure 3, dont la sortie est reliée, par la liaison 12, aux moyens d'alarme 13.

On rappelle que :

- $\gamma_1 t$ est l'accélération réelle, à l'instant t, de l'aéronef,
- $V_{11}t$ est la vitesse réelle, à l'instant t, de l'aéronef,
- $V_{12}t$ est la vitesse réalisable, à l'instant t, de l'aéronef,
- Vat est la vitesse théorique, à l'instant t, de l'aéronef,
- $D_1 t$ est la distance réelle parcourue, à l'instant t, par l'aéronef,
- $D_2 t$ est la distance réalisable parcourue, à l'instant t, par l'aéronef,
- $D_1$ est la distance réelle prévue, parcourue par l'aéronef lorsque $V_{11}t$ sera égale à Vat,
- $D_2$ est la distance réalisable prévue, parcourue par l'aéronef lorsque $V_{12}t$ sera égale à Vat.

$D_1$ et $D_2$ résultent de l'application de la relation fondamentale de la cinématique. Ainsi :

$$D_1 = D_1 t + \frac{1}{2} \gamma_1 t . \Delta t^2 + V_{11}t . \Delta t$$

expression dans laquelle $\Delta t$ est le temps nécessaire pour que $V_{11}t = Vat$, c'est-à-dire que :

$$\Delta t = (Vat - V_{11}t) / \gamma_1 t$$

ce qui entraîne que :

$$D_1 = D_1\overline{t} + (Va\overset{2}{t} - V_{11}\overset{2}{t}) / 2\gamma_1 t$$

De la même façon :

$$D_2 = D_2t + \frac{1}{2}\gamma_1 t . \Delta\overset{2}{t} + V_{12}t . \Delta t$$

expression dans laquelle $\Delta t$ est le temps nécessaire pour que $V_{12}t = Vat$, c'est-à-dire que :

$$\Delta t = (Vat - V_{12}t) / \gamma_1 t$$

ce qui entraîne que :

$$D_2 = D_2t + (Va\overset{2}{t} - V_{12}\overset{2}{t}) / 2\gamma_1 t$$

En se référant maintenant à la figure 2, montrant un exemple de réalisation du dispositif de calcul 7, l'accélération réalisable $\gamma_2 t$, acheminée par la liaison 3, est appliquée à l'entrée d'un intégrateur 20, susceptible de fournir à sa sortie la vitesse réalisable $V_{12}t$, laquelle est appliquée, par la liaison 21, à un intégrateur 22, susceptible de fournir à sa sortie la distance réalisable $D_2t$, laquelle est appliquée, par la liaison 23, à l'une des entrées d'un additionneur 24. Par ailleurs, par la liaison 25, la vitesse réalisable $V_{12}t$ est appliquée à un calculateur 26 susceptible de fournir à sa sortie la valeur

$$V_{12}\overset{2}{t}$$

appliquée, par la liaison 27, à l'entrée négative d'un soustracteur 28.

De même, l'accélération réelle $\gamma_1 t$, acheminée par la liaison 5, est appliquée à l'entrée d'un intégrateur 29, susceptible de fournir à sa sortie la vitesse réelle $V_{11}t$, laquelle est appliquée, par la liaison 30, à un intégrateur 31, susceptible de fournir à sa sortie la distance réelle $D_1t$, laquelle est appliquée, par la liaison 32, à l'une des entrées d'un additionneur 33. Par ailleurs, par la liaison 34, la vitesse réelle $V_{11}t$ est appliquée à un calculateur 35 susceptible de fournir à sa sortie la valeur

$$V_{11}\overset{2}{t}$$

appliquée, par la liaison 36, à l'entrée négative d'un soustracteur 37.

En outre, l'accélération théorique $\gamma a$, acheminée par la liaison 4, est appliquée à l'entrée d'un intégrateur 38, susceptible de fournir à sa sortie la vitesse théorique $Vat$, laquelle est appliquée, par la liaison 39, à un intégrateur 40, susceptible de fournir à sa sortie la distance théorique $Dat$, laquelle est appliquée, par la liaison 41, aux entrées, correspondant chacune au dénominateur, des diviseurs 42 et 43. De plus, par la liaison 44, la vitesse théorique $Vat$ est appliquée à un calculateur 45 susceptible de fournir à sa sortie la valeur

$$Va\overset{2}{t}$$

appliquée, par la liaison 46, à l'entrée positive du soustracteur 28. Egalement, par la liaison 47, la vitesse théorique $Vat$ est appliquée à un calculateur 48 susceptible de fournir à sa sortie la valeur

$$Va\overset{2}{t}$$

appliquée, par la liaison 49, à l'entrée positive du soustracteur 37.

Le soustracteur 28, qui fournit à sa sortie la valeur

$$(Va\overset{2}{t} - V_{12}\overset{2}{t}),$$

est relié, par la liaison 50, a un calculateur 51 susceptible de fournir à sa sortie la valeur

$$(Vat^2 - V_{12}t^2)/2,$$

laquelle est appliquée, par la liaison 52, à l'entrée, correspondant au numérateur, d'un diviseur 53. De même, le soustracteur 37, qui fournit à sa sortie la valeur

$$(Vat^2 - V_{11}t^2),$$

est relié, par la liaison 54, à un calculateur 55 susceptible de fournir à sa sortie la valeur

$$(Vat^2 - V_{11}t^2)/2, \quad$$

laquelle est appliquée, par la liaison 56, à l'entrée, correspondant au numérateur, d'un diviseur 57.

Aux entrées, correspondant chacune au dénominateur, des diviseurs 53 et 57, est appliquée, par la liaison 58, l'accélération réelle $\gamma_1 t$. Le diviseur 53, qui fournit à sa sortie la valeur

$$(Vat^2 - V_{12}t^2)/2\,\gamma_1 t,$$

est relié, par la liaison 59, à l'additionneur 24, tandis que le diviseur 57, qui fournit à sa sortie la valeur

$$(Vat^2 - V_{11}t^2)/2\,\gamma_1 t,$$

est relié, par la liaison 60, à l'additionneur 33. L'additionneur 24, qui fournit à sa sortie la valeur

$$D_2 t + (Vat^2 - V_{12}t^2)/2\,\gamma_1 t,$$

est relié, par la liaison 61, à l'entrée, correspondant au numérateur, du diviseur 42, tandis que l'additionneur 33, qui fournit à sa sortie la valeur

$$D_1 t + (Vat^2 - V_{11}t^2)/2\,\gamma_1 t,$$

est relié, par la liaison 62, à l'entrée, correspondant au numérateur, du diviseur 43.

Aux sorties (liaisons 8 et 9) des diviseurs 42 et 43, apparaissent, respectivement, les rapports :
- $D_2/Dat$
- $D_1/Dat$

dans lesquels, comme déjà indiqué :
- $D_1$ est la distance réelle prévue, parcourue par l'aéronef lorsque $V_{11}t$ sera égale à Vat, et
- $D_2$ est la distance réalisable prévue, parcourue par l'aéronef lorsque $V_{12}t$ sera égale à Vat.

La vitesse aérodynamique VTAS, acheminée par la liaison 6 et filtrée dans le filtre 63, est appliquée, par la liaison 64, à l'entrée positive d'un soustracteur 65, à l'entrée négative duquel est appliquée, par la liaison 66, la vitesse réelle $V_{11}t$. On détermine ainsi la composante longitudinale du vent $VTAS - V_{11}t = Wx$, appliquée, par la liaison 67, au dispositif 68 et dont la variation est à comparer à un seuil déterminé, comme on le verra par la suite.

Par ailleurs, le dispositif de calcul 7 peut comprendre, en amont, des moyens d'échantillonage (non représentés) permettant d'obtenir une suite de valeurs numériques des accélérations théorique, réelle et réalisable et de la vitesse aérodynamique, à une période d'échantillonage de par exemple 100 millisecondes (d'où la notion de temps $\underline{t}$ qui apparaît sur tous les paramètres du calcul).

On se référera maintenant à la figure 3 montrant un exemple de réalisation d'un dispositif pour fournir un signal d'information 11.

Comme indiqué ci-dessus, le dispositif de calcul 7 permet de déterminer trois "observateurs" :

1) Distance réelle prévue / Distance théorique

soit $D_1t/Dat$

2) Distance réalisable prévue / Distance théorique

soit $D_2t/Dat$

3) Variation de vent

soit $\Delta W$

Une solution peut consister à comparer ces différents observateurs à un seuil prédéterminé fixe. Cependant, en ce qui concerne les observateurs 1) et 2), il est clair qu'un tel seuil peut être plus élevé lorsque la vitesse de l'aéronef est encore "très inférieure" à la vitesse critique telle que définie précédemment, mais doit être moins élevé lorsque la vitesse de l'aéronef approche la vitesse critique. Par ailleurs, il convient que l'alerte puisse être déclenchée au plus tard une seconde, par exemple, avant que la vitesse de l'aéronef n'atteigne la vitesse critique prévue. La réalisation du dispositif 11 tient compte de ces différentes remarques.

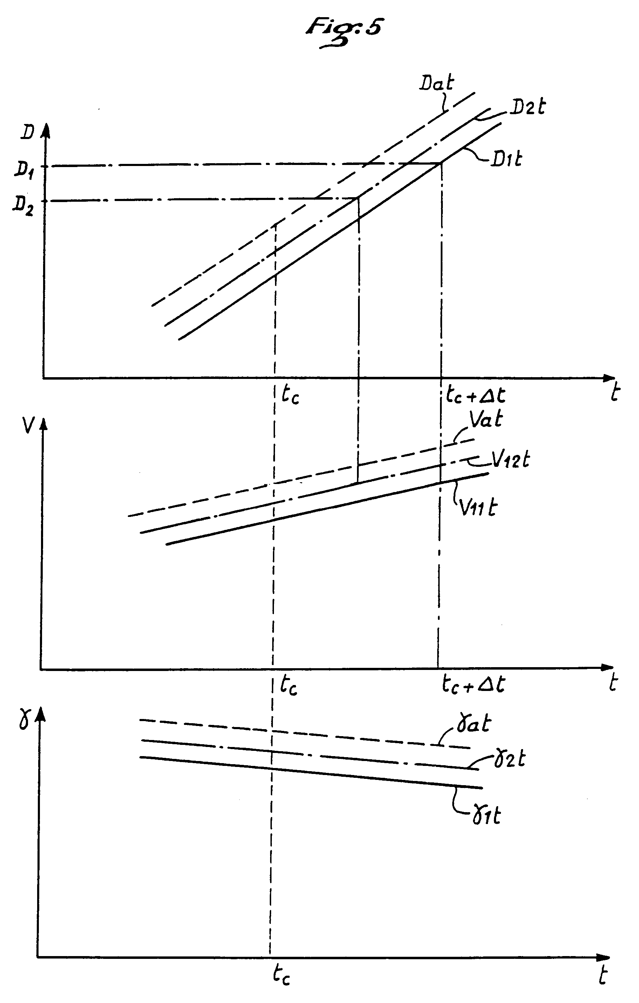

Ainsi, la vitesse critique est appliquée, par la liaison 70, à l'entrée positive d'un soustracteur 71, aux entrées négatives duquel sont appliquées, par les liaison respectives 72 et 73, une constante de vitesse, tenant compte dudit "seuil temporel" d'alerte (une seconde), et la vitesse de l'aéronef, filtrée en 74. La sortie $\Delta V$ du soustracteur 71 est reliée, par la liaison 75, à l'entrée d'un calculateur 76 dont la sortie est une valeur de seuil S, variable comme l'illustre la figure 4.

Le seuil S est une fonction linéaire croissante de forme : $S = a \Delta V + b$, dans laquelle $\underline{a}$ et $\underline{b}$ sont des constantes compatibles avec les marges théoriques du calcul du décollage.

A titre d'exemple, on a représenté sur la figure 4 la fonction S sur l'intervalle de vitesse, exprimée en noeud, 1 m/s = 1,946 noeud, de 0 à 100. Dans ce cas particulier, si $\Delta V = 0$, $S = 1,15$ et si $\Delta V = 100$, $S = 2,5$ ; le seuil S peut donc s'exprimer par la formule $S = 0,0135 \Delta V + 1,15$. Cela signifie qu'un excès "prévision par rapport à théorie" de 150 % peut être toléré au début du décollage, excès qui n'est plus que de 15 % au voisinage de la vitesse critique, cela n'étant bien entendu qu'un exemple possible parmi d'autres.

Par ailleurs, la valeur $D_2t/Dat$ est appliquée, par la liaison 8, à l'entrée positive d'un soustracteur 77, à l'entrée négative duquel est appliquée, par la liaison 79, la valeur de seuil S déterminée dans le dispositif 76. De même, la valeur $D_1t/Dat$ est appliquée, par la liaison 9, à l'entrée positive d'un soustracteur 78, à l'entrée négative duquel est appliquée, par la liaison 80, ladite valeur de seuil S.

Par la liaison 81, la valeur $D_2t/Dat-S$ est appliquée à l'entrée d'un comparateur 82 dont la sortie est 1 si $D_2t/Dat - S \geqq 0$, et 0 si $D_2t/Dat - S < 0$. De même, par la liaison 83, la valeur $D_1t/Dat - S$ est appliquée à l'entrée d'un comparateur 84 dont la sortie est 1 si $D_1t/Dat - S \geqq 0$, et 0 si $D_1t/Dat - S < 0$. De plus, par la liaison 85, la valeur S est appliquée à l'entrée d'un comparateur 86 dont la sortie est 1 quand S dépasse une valeur prédéterminée, par exemple égale à 1,15.

En outre, la variation de vent, acheminée par la liaison 10, est fournie à l'entrée d'un comparateur 87 dont la sortie est 1 si la variation de vent est supérieure à un seuil prédéterminé depuis, par exemple, 5 secondes, cette variation de vent correspondant bien entendu à un vent "déporteur".

A une première porte logique ET 88, sont appliquées, par la liaison 89, la sortie du comparateur 82 et, par la liaison 90, la sortie du comparateur 86. A une deuxième porte logique ET 91, sont appliquées, par la liaison 92, la sortie du comparateur 84 et, par la liaison 93, la sortie du comparateur 86. A une troisième porte logique ET 94, sont appliquées, par la liaison 95, la sortie du comparateur 87 et, par la liaison 96, la sortie du comparateur 86. Les sorties des portes ET 88, 91 et 94 sont appliquées, par les liaisons respectives 97, 98 et 99, aux entrées d'une porte logique OU dont la sortie 12 est reliée aux moyens d'alarme 13.

Ainsi, l'alerte sera déclenchée lorsqu'au moins un des trois "observateurs" précédemment définis donne un signal non nul aux portes 88, 91 ou 94, alerte bien entendu visualisée sur le tableau de bord. Celle-ci sera désactivée au délestage du train, et les moniteurs de décollage seront alors remis en condition d'initialisation et désactivés.

En se référant à la figure 5, montrant les courbes des accélérations, vitesses et distances utilisées dans le système conforme à l'invention, au voisinage d'un instant du décollage tc, on voit que, dans cet exemple de situation résultant d'une anomalie au cours du décollage, l'accélération réelle $\gamma_1t$ est inférieure à l'accélération théorique $\gamma at$, la vitesse réelle $V_{11}t$ est inférieure à la vitesse théorique Vat qui, comme le montre la courbe de la vitesse réelle $V_{11}t$, serait atteinte à l'instant $tc + \Delta t$, la courbe $D_1t$ permettant de prévoir de plus quelle serait la distance parcourue par l'aéronef à cet instant.

Connaissant la marge tolérée dans le calcul de la distance théorique de décollage, il est ainsi facile d'informer le pilote lorsque cette marge est dépassée, par simple comparaison entre la distance théorique et la distance prévue.

Il convient de souligner que, bien que la marge soit calculée pour la vitesse critique $V_1$ de telle façon que les freins absorbent la totalité de l'énergie $1/2mV_1^2$ avant la fin de la piste, le système est tel que le pilote sera informé en continu, bien avant $V_1$, de sa situation actuelle. Le pilote sera donc averti avec une "marge d'énergie" supplémentaire qui lui permettra de décider de la suite du décollage, ou de l'arrêt de l'aéronef.

Des remarques semblables s'appliquent aux accélération, vitesse et distance réalisables.


**Revendications**

1. Système pour l'élaboration à bord d'un aéronef d'un signal d'alarme en cas d'anomalie pendant le décollage, avant que l'aéronef n'atteigne une vitesse critique de roulement jusqu'à laquelle le processus de décollage peut être modifié ou interrompu et au-delà de laquelle le décollage doit être poursuivi, caractérisé en ce qu'il comporte :
   - des moyens (1,2) susceptibles de délivrer des signaux représentatifs de l'accélération théorique et de l'accélération réelle, à un instant donné, de l'aéronef,
   - des moyens (7) pour calculer l'expression :

$$D_1 = D_1t + (Vat^2 - V_{11}^2t) / 2\gamma_1 t$$

   dans laquelle :
   . $\gamma_1 t$ est l'accélération réelle, à l'instant t, de l'aéronef,
   . $V_{11}t$ est la vitesse réelle, à l'instant t, de l'aéronef,
   . Vat est la vitesse théorique, à l'instant t, de l'aéronef,
   . $D_1t$ est la distance réelle parcourue, à l'instant t, par l'aéronef, et
   . $D_1$ est la distance réelle prévue parcourue par l'aéronef lorsque $V_{11}t$ sera égale à Vat,
   ainsi que le rapport :

$$D_1 / Dat$$

   dans lequel :
   . $D_1$ est tel que défini ci-dessus, et
   . Dat est la distance théorique parcourue, à l'instant t, par l'aéronef,
   - des moyens (11) pour comparer le rapport $D_1$/Dat à un seuil prédéterminé S garantissant une distance minimale de sécurité pour le freinage et l'arrêt de l'aéronef, et fournir un signal d'information correspondant à des moyens d'alarme (13) susceptibles d'émettre un signal d'alarme lorsque ledit rapport $D_1$/Dat est supérieur ou égal audit seuil.

2. Système selon la revendication 1,
   caractérisé en ce qu'il comprend de plus :
   - des moyens (1) susceptibles de délivrer des signaux représentatifs de l'accélération réalisable, à un instant donné, de l'aéronef,
   - des moyens (7) pour calculer l'expression :

$$D_2 = D_2t + (Vat^2 - V_{12}^2t) / 2\gamma_1 t$$

   dans laquelle :
   . $\gamma_1 t$ est l'accélération réelle, à l'instant t, de l'aéronef,
   . $V_{12}t$ est la vitesse réalisable, à l'instant t, de l'aéronef,
   . Vat est la vitesse théorique, à l'instant t, de l'aéronef,
   . $D_2t$ est la distance réalisable, parcourue par l'aéronef à l'instant t, et
   . $D_2$ est la distance réalisable prévue, parcourue par l'aéronef lorsque $V_{12}t$ sera égale a Vat,
   ainsi que le rapport :

$$D_2 / Dat$$

   dans lequel :
   . $D_2$ est tel que défini ci-dessus, et
   . Dat est la distance théorique parcourue, à l'instant t, par l'aéronef, lesdits moyens de comparaison (11) permettant de comparer le rapport $D_2$/Dat audit seuil prédéterminé S, et lesdits moyens d'alarme (13) étant susceptibles d'émettre un signal d'alarme lorsque ledit rapport $D_2$/Dat est supérieur ou égal audit seuil.

3. Système selon la revendication 1 ou la revendication 2,
caractérisé en ce qu'il comprend de plus des moyens (63-68) pour déterminer la variation $\Delta$ W de la composante longitudinale du vent, à partir de l'expression Wx = VTAS - $V_{11}$t, dans laquelle Wx est la composante longitudinale du vent, VTAS la vitesse aérodynamique et $V_{11}$t la vitesse réelle de l'aéronef, lesdits moyens de comparaison (11) permettant de comparer $\Delta$ W à un seuil prédéterminé $\Delta$ WS, et lesdits moyens d'alarme (13) étant susceptibles d'émettre un signal d'alarme lorsque $\Delta$ W est supérieur ou égal audit seuil $\Delta$ WS.

4. Système selon l'une quelconque des revendications 1 à 3,
caractérisé en ce que ledit seuil S, auquel sont comparés le rapport $D_1$/Dat et/ou $D_2$/Dat, est variable, et diminue lorsque la différence $\Delta$ V entre la vitesse critique et la vitesse atteinte par l'aéronef diminue.

5. Système selon la revendication 4,
caractérisé en ce que ledit seuil S est défini par la fonction S = a $\Delta$ V + b, a et b étant des constantes compatibles avec les marges théoriques du calcul du décollage.

6. Système selon l'une quelconque des revendications 1 à 5,
caractérisé en ce qu'il comprend des moyens d'échantillonnage permettant d'obtenir une suite de valeurs numériques des accélérations théorique, réelle et réalisable et de la vitesse aérodynamique.

**Patentansprüche**

1. System zur Ausarbeitung eines Alarmsignals an Bord von Luftfahrzeugen bei Auftreten von Anomalien während des Abhebens, und zwar bevor das Luftfahrzeug eine kritische Fahrgeschwindigkeit erreicht, bis zu der der Vorgang des Abhebens verändert oder unterbrochen werden kann, und bei deren Überschreiten das Abheben vollzogen werden muß,
dadurch gekennzeichnet, daß es folgendes beinhaltet :
   - Mittel (1, 2), die geeignet sind, Signale zu liefern, die zu einem gegebenen Zeitpunkt die theoretische Beschleunigung und die tatsächliche Beschleunigung des Luftfahrzeuges repräsentieren ,
   - Mittel (7) zur Berechnung des Ausdrucks :

$$D_1 = D_1 t + (Vat^2 - V_{11}t)^2 / 2 \gamma_1 t$$

worin :
   - $\gamma_1$t die tatsächliche Beschleunigung des Luftfahrzeuges zum Zeitpunkt t darstellt,
   - $V_{11}$t die tatsächliche Geschwindigkeit des Luftfahrzeuges zum Zeitpunkt t darstellt,
   - Vat die theoretische Geschwindigkeit des Luftfahrzeuges zum Zeitpunkt t darstellt,
   - $D_1$t die vom Luftfahrzeug zum Zeitpunkt t zurückgelegte tatsächliche Distanz darstellt, und
   - $D_1$ die vom Luftfahrzeug zurückgelegte vorgesehene tatsächliche Distanz darstellt, wenn $V_{11}$t Vat entspricht,
sowie des Verhältnisses :

$$D_1 / Dat$$

worin :
   - $D_1$ so wie oben festgelegt ist, und
   - Dat die vom Luftfahrzeug zum Zeitpunkt t zurückgelegte theoretische Distanz darstellt,
   - Mittel (11) zum Vergleich des Verhältnisses $D_1$/Dat mit einer vorher festgelegten Schwelle S, die eine minimale Sicherheitsdistanz für die Abbremsung und das Anhalten des Luftfahrzeuges garantiert, und zur Lieferung eines korrespondierenden Informationssignals zu Alarmmitteln (13), die geeignet sind, ein Alarmsignal auszusenden, sobald das Verhältnis $D_1$/Dat dieser Schwelle entspricht oder sie überschreitet.

**2.** System gemäß Anspruch 1,
dadurch gekennzeichnet, daß es zusätzlich folgendes umfaßt :
- Mittel (1), die geeignet sind, Signale zu liefern, die die realisierbare Beschleunigung des Luftfahrzeuges zu einem gegebenen Zeitpunkt repräsentieren,
- Mittel (7) zur Berechnung des Ausdrucks :

$$D_2 = D_2 t + (Vat - V_{12}t)^2 / 2 \gamma_1 t$$

worin :
- $\gamma_1 t$ die tatsächliche Beschleunigung des Luftfahrzeuges zum Zeitpunkt t darstellt,
- $V_{12}t$ die realisierbare Geschwindigkeit des Luftfahrzeuges zum Zeitpunkt t darstellt,
- $Vat$ die theoretische Geschwindigkeit des Luftfahrzeuges zum Zeitpunkt t darstellt,
- $D_2 t$ die vom Luftfahrzeug zum Zeitpunkt t zurückgelegte realisierbare Distanz darstellt, und
- $D_2$ die vorgesehene realisierbare Distanz darstellt, die das Luftfahrzeug zurücklegt, wenn $V_{12}t$ $Vat$ enspricht,

sowie des Verhältnisses :

$$D_2 / Dat$$

worin :
- $D_2$ so wie oben festgelegt ist, und
- $Dat$ die vom Luftfahrzeug zum Zeitpunkt t zurückgelegte theoretische Distanz darstellt,

wobei die Vergleichsmittel (11) es ermöglichen, das Verhältnis $D_2/Dat$ mit der im voraus festgelegten Schwelle S zu vergleichen, und die Alarmmittel (13) geeignet sind, ein Alarmsignal auszusenden, sobald das Verhältnis $D_2/Dat$ dieser Schwelle entspricht oder sie überschreitet.

**3.** System gemäß Anspruch 1 oder Anspruch 2,
dadurch gekennzeichnet, daß es zusätzlich Mittel (63-68) zur Bestimmung der Schwankung $\Delta W$ der Längskomponente des Windes umfaßt, ausgehend vom Ausdruck $Wx = VTAS - V_{11}t$, worin $Wx$ die Längskomponente des Windes, $VTAS$ die aerodynamische Geschwindigkeit und $V_{11}t$ die tatsächliche Geschwindigkeit des Luftfahrzeuges repräsentiert, wobei die Vergleichsmittel (11) es ermöglichen, $\Delta W$ mit einer vorher festgelegten Schwelle $\Delta WS$ zu vergleichen, und wobei die Alarmmittel (13) geeignet sind, ein Alarmsignal auszusenden, sobald $\Delta W$ dieser Schwelle $\Delta WS$ entspricht oder sie überschreitet.

**4.** System gemäß einem der Ansprüche 1 bis 3,
dadurch gekennzeichnet, daß diese Schwelle S, mit der die Verhältnisse $D_1/Dat$ und/oder $D_2/Dat$ verglichen werden, variabel ist und niedriger wird, wenn die Differenz $\Delta V$ zwischen der kritischen Geschwindigkeit und der vom Luftfahrzeug erreichten Geschwindigkeit abnimmt.

**5.** Sytem gemäß Anspruch 4,
dadurch gekennzeichnet, daß die Schwelle S durch die Funktion $S = a \Delta V + b$ festgelegt wird, wobei _a_ und _b_ Konstanten sind, die mit der für das Abheben errechneten theoretischen Spanne übereinstimmen.

**6.** System gemäß einem der Ansprüche 1 bis 5,
dadurch gekennzeichnet, daß es über Mittel zur Stichprobenkontrolle verfügt, die es ermöglichen, eine Folge an numerischen Werten der theoretischen, der tatsächlichen und der realisierbaren Beschleunigungen sowie der aerodynamischen Geschwindigkeit zu erhalten.

## Claims

**1.** System for deriving an alarm signal on board an aircraft in the event of an anomaly during take-off, before the aircraft reaches a critical rolling speed up to which the take-off process may be modified or interrupted and beyond which the take-off must be proceeded with, characterized in that it includes:
- means (1,2) capable of delivering signals representative of the theoretical acceleration and of the actual acceleration of the aircraft at a given instant,
- means (7) for calculating the expression:

$$D_1 = D_1 t + (Vat^2 - V_{11}^2 t) / 2\gamma_1 t$$

in which:
. $\gamma_1 t$ is the actual acceleration of the aircraft at the instant t,
. $V_{11} t$ is the actual speed of the aircraft at the instant t,
. Vat is the theoretical speed of the aircraft at the instant t,
. $D_1 t$ is the actual distance travelled by the aircraft at the instant t, and
. $D_1$ is the anticipated actual distance travelled by the aircraft when $V_{11} t$ will be equal to Vat,
as well as the ratio:

$$D_1/Dat$$

in which:
. $D_1$ is as defined above, and
. Dat is the theoretical distance travelled by the aircraft at the instant t,
- means (11) for comparing the ratio $D_1/Dat$ to a predetermined threshold S guaranteeing a minimum safety distance for braking and stopping the aircraft, and supplying a corresponding information signal to alarm means (13) capable of sending out an alarm signal when the said ratio $D_1/Dat$ is above or equal to the said threshold.

2. System according to Claim 1, characterized in that it further comprises:
   - means (1) capable of delivering signals representative of the acceleration achievable by the aircraft at a given instant,
   - means (7) for calculating the expression:

$$D_2 = D_2 t + (Vat^2 - V_{12}^2 t) / 2\gamma_1 t$$

in which
. $\gamma_1 t$ is the actual acceleration of the aircraft at the instant t,
. $V_{12} t$ is the speed achievable by the aircraft at the instant t,
. Vat is the theoretical speed of the aircraft at the instant t,
. $D_2 t$ is the achievable distance travelled by the aircraft at the instant t and
. $D_2$ is the anticipated achievable distance travelled by the aircraft when $V_{12} t$ will be equal to Vat,
as well as the ratio:

$$D_2/Dat$$

in which:
. $D_2$ is as defined above, and
. Dat is the theoretical distance travelled by the aircraft at the instant t,
the said comparison means (11) making it possible to compare the ratio $D_2/Dat$ with the said predetermined threshold S, and the said alarm means (13) being capable of sending out an alarm signal when the said ratio $D_2/Dat$ is above or equal to the said threshold.

3. System according to Claim 1 or Claim 2, characterized in that it further comprises means (63-68) for determining the variation ΔW of the longitudinal component of the wind, from the expression Wx = VTAS - $V_{11} t$, in which Wx is the longitudinal component of the wind, VTAS the aerodynamic speed and $V_{11} t$ the actual speed of the aircraft, the said comparison means (11) making it possible to compare ΔW with a predetermined threshold ΔWS, and the said alarm means (13) being capable of sending out an alarm signal when ΔW is above or equal to the said threshold ΔWS.

4. System according to any one of Claims 1 to 3, characterized in that the said threshold S, with which the ratio $D_1/Dat$ and/or $D_2/Dat$ are compared is variable, and decreases when the difference ΔV between the critical speed and the speed reached by the aircraft decreases.

5. System according to Claim 4, characterized in that the said threshold S is defined by the function S = a ΔV + b, a and b being constants compatible with the theoretical margins of the calculation for the take-off.

6. System according to any one of Claims 1 to 5, characterized in that it comprises sampling means making it possible to obtain a series of digital values of the theoretical, actual and achievable accelerations and of the aerodynamic speed.

## Fig:1

EP 0 404 606 B1

## Fig:4

Fig. 2

Fig.3

*Fig.5*